(19) Europäisches Patentamt
European Patent Office
Office européen des brevets

(11) EP 0 798 357 B1

(12) # EUROPÄISCHE PATENTSCHRIFT

(45) Veröffentlichungstag und Bekanntmachung des Hinweises auf die Patenterteilung:
**18.08.1999 Patentblatt 1999/33**

(51) Int Cl.[6]: **C09J 123/08**, C09J 157/00, C09J 133/00, C09J 125/04

(21) Anmeldenummer: **97104487.0**

(22) Anmeldetag: **17.03.1997**

(54) **Verwendung von wässrigen Dispersionen als Heisssiegellack**

Use of water dispersions as heat-sealable laquers

Utilisation de dispersions aqueuses comme laque thermosoudable

(84) Benannte Vertragsstaaten:
**AT BE CH DE ES FR GB IT LI NL SE**

(30) Priorität: **25.03.1996 DE 19611669**

(43) Veröffentlichungstag der Anmeldung:
**01.10.1997 Patentblatt 1997/40**

(73) Patentinhaber: **BASF Aktiengesellschaft**
**67063 Ludwigshafen (DE)**

(72) Erfinder:
- **Wirth, Thomas, Dr.**
  **67251 Freisheim (DE)**
- **Gyopar, Maria, Dr.**
  **67098 Bad Dürkheim (DE)**
- **Reichert, Anke, Dr.**
  **67227 Frankenthal (DE)**
- **Telser, Thomas, Dr.**
  **69469 Wienheim (DE)**

(56) Entgegenhaltungen:
**EP-A- 0 129 178**

- **PATENT ABSTRACTS OF JAPAN vol. 017, no. 037 (C-1019), 25.Januar 1993 & JP 04 253784 A (HOECHST GOSEI KK), 9.September 1992,**
- **PATENT ABSTRACTS OF JAPAN vol. 003, no. 023 (C-038), 26.Februar 1979 & JP 53 147744 A (MITSUI PETROCHEM IND LTD), 22.Dezember 1978,**
- **PATENT ABSTRACTS OF JAPAN vol. 006, no. 250 (C-139), 9.Dezember 1982 & JP 57 147564 A (KURARAY KK), 11.September 1982,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 798 357 B1

## Beschreibung

Die vorliegende Erfindung betrifft ein Verfahren zum Heißsiegeln von Substraten.

Verpackungen werden vielfältig durch Heißsiegeln von Substraten hergestellt, dabei trägt mindestens eines der beiden zu verbindenden Substrate einen Überzug aus einem schmelzbaren Polymerisat, welcher auch als Siegellack bezeichnet wird.

Die Substrate werden bei Temperatur und Druckwerten zusammengefügt, bei denen die Substrate selbst nicht verformt oder beschädigt werden, der Polymerisatüberzug aber schmilzt und sich mit dem anderen Substrat verbindet. Nach dem Erkalten sind die Substrate im Bereich der erhitzten Flächen miteinander verbunden.

Mitunter wird nur ein Teil der mit dem schmelzbaren Polymerisat überzogenen Fläche des einen Substrats mit dem anderen Substrat in punkt- oder linienförmigen Zonen versiegelt. Zum Beispiel wird eine mit einem Heißsiegellack beschichtete Aluminiumfolie als Deckel auf den Rand eines Behälters aus tiefgezogener Kunststoff-folie gesiegelt.

In der Literatur werden zahlreiche schmelzbare Polymerisate als Heißsiegellack empfohlen.

Für ihre Auswahl spielen verschiedene Kriterien eine Rolle; dazu gehören der Abstand ihrer Schmelztemperatur von der Schmelztemperatur der Substrate, die Haftung auf den Substraten, die Festigkeit der Siegelnaht und die Beschichtungsbedingungen beim Aufbringen des Heißsiegellacks auf eines der Substrate, wobei diese Anforderungen für unterschiedlichste Substrate zu erfüllen sind. Bei Lebensmittel- und Arzneimittelverpackungen sind zusätzlich die lebensmittelrechtliche bzw. pharmakologische Unbedenklichkeit zu beachten.

Da die Beschichtung des Substrats und das Verkleben in verschiedenen Arbeitsgängen durchgeführt werden, ergeben sich für Heißsiegelbeschichtungen teils gegensätzliche Anforderungen.

Die beschichteten Substrate müssen gestapelt werden können, ohne daß sie zusammenhaften (Blockfestigkeit).

Beim Heißsiegeln ist es jedoch erwünscht, daß nicht zu hohe Temperaturen erforderlich sind und die erhaltenen Verklebungen eine hohe Festigkeit zeigen (gute Heißsiegelbarkeit).

Aus der DE-A 3 921 256 sind Heißsiegellacke auf Basis einer wäßrigen Dispersion, welche zwei unterschiedliche, radikalisch polymerisierte Polymere enthält, bekannt.

Auch die Heißsiegellacke aus der US-A-5 385 967 enthalten zwei unterschiedliche Polymere, wobei der Unterschied in der Glasübergangstemperatur der Polymeren mindestens 20°C beträgt.

Die EP-A-129 178 betrifft heißsiegelfähige Beschichtungsmassen, welche in einem organischen Lösungsmittel vorliegen. Die Beschichtungsmasse besteht aus 3 polymeren Bestandteilen, bei denen es sich z.B. auch um ein Polyolefin, ein Polyacrylat und ein Mischpolymerisat handelt.

Die bisher bekannten Heißsiegellacke erfüllen die obigen Anforderungen in nicht ausreichendem Maße

Aufgabe der vorliegenden Erfindung war ein Verfahren zum Heißsiegeln von Substraten unter Verwendung eines wäßrigen Heißsiegellacks, wobei die obigen Anforderungen erfüllt werden. Insbesondere soll das Verfahren eine gute Siegelnahtfestigkeit auch im Falle der Verwendung von Aluminium und Polymeren als heißzusiegelnde Substrate bewirken.

Demgemäß wurde ein Verfahren zum Heißsiegeln von Substraten dadurch gekennzeichnet, daß ein Substrat mit einer wäßrigen Dispersion, welche ein Ethylenpolymer A) mit mindestens 20 Gew.-% Ethylen und mindestens 5 Gew.-% einer ethylenisch ungesättigten Säure und ein radikalisch polymerisiertes Polymer B) enthält, beschichtet wird und das beschichtete Substrat mit einem zweiten Substrat bei erhöhter Temperatur verpreßt wird, gefunden. Gefunden wurden auch wäßrige Dispersionen, welche sich für dieses Verfahren eignen.

Die wäßrigen Dispersionen für das erfindungsgemäße Verfahren enthalten ein Ethylenpolymer A) und ein radikalisch polymerisiertes Polymer B).

Das Ethylenpolymer enthält mindestens 20 Gew.-%, bevorzugt mindestens 40 Gew.-% und besonders bevorzugt mindestens 60 Gew.-% Ethylen und mindestens 5 Gew.-% bevorzugt mindestens 10 Gew.-% und besonders bevorzugt mindestens 15 Gew.-% einer ethylenisch ungesättigten Säure als Aufbaukomponenten.

Das Ethylenpolymer A) besteht insbesondere aus

$a_1$) 20 bis 95 Gew.-%, bevorzugt 40 bis 90 Gew.-% und besonders bevorzugt aus 60 bis 85 Gew.-% Ethylen

$a_2$) 5 bis 80 Gew.-%, bevorzugt 10 bis 60 Gew.-% und besonders bevorzugt 15 bis 40 Gew.-% einer ethylenisch ungesättigten Säure und

$a_3$) 0 bis 60 Gew.-%, bevorzugt 0 bis 40 Gew.-% und besonders bevorzugt 0 bis 20 Gew.-% weiteren, von a) und b) verschiedenen Monomeren.

Ethylenisch ungesättigte Säuren a2) sind insbesondere Acrylsäure oder Methacrylsäure.

Weitere, mit Ethylen copolymerisierbare Monomere $a_3$) können z.B. (Meth)acrylsäureester, insbesondere $C_1$-$C_{10}$-(Meth)acrylsäureester wie (Meth)acrylsäuremethyl-, -ethyl-, -propyl-, -butyl- oder -ethxylhexylester, (Meth)acrylnitril, (Meth)acrylamid oder Vinylester wie Vinylacetat oder Vinylpropionat sein.

Die Herstellverfahren für die Ethylenpolymeren A sind dem Durchschnittsfachmann bekannt. Die Herstellung derartiger Polymerer erfolgt z.B. durch (Co-)Polymerisation von Ethylen in kontinuierlich betriebenen, rohrförmigen Polymerisationssystemen bei Drükken von 500-5000 bar und Temperaturen von 50-450°C in Gegenwart von radikalisch zerfallenden Polymerisationsinitiatoren.

Die Dichten derartiger Copolymerer sind im allgemeinen größer als 0,925 g/cm$^3$ (T = 23°C). Die Molekulargewichte betragen im allgemeinen ca. 500-40000 Dalton, insbesondere 5000-20000 ($M_n$). Nach erfolgter Polymerisation werden die erfindungsgemäß verwendeten Copolymerisate A vorzugsweise durch Druckemulgierung, gegebenenfalls unter Zusatz von einem Neutralisationsmittel in eine wäßrige Emulsion überführt.

Dieses Verfahren der Druckemulgierung von Polyethylen zu wäßrigen (Sekundär)emulsionen ist dem Durchschnittsfachmann bekannt.

Als Neutralisationsmittel eignen sich bevorzugt Ammoniak, Diethylamin, Dimethylethanolamin, Diethanolamin etc.

Zur Emulsionsherstellung können auch übliche ionische bzw. nichtionische Emulgatoren mitverwendet werden. Bevorzugt werden dünnflüssige, feinteilige, helle Emulsionen des Polymeren A mit einem Festgehalt von ca. 20-40 % und einem pH-Wert größer 8 erhalten.

Das Polymer B) besteht insbesondere aus

| | | |
|---|---|---|
| $b_1$) | 30 bis 100 Gew.-% | sogenannter Hauptmonomere ausgewählt aus $C_1$-$C_{20}$-Alkyl(meth)acrylaten, $C_8$-$C_{12}$-vinylaromatischen Verbindungen, Vinylester von Carbonsäuren mit 1 bis 20 C-Atomen und ethylenisch ungesättigten Nitrilen, |
| $b_2$) | 0 bis 30 Gew.-% | einer ethylenisch ungesättigten Säure oder Anhydrid, |
| $b_3$) | 0 bis 20 Gew.-% | vernetzend wirkender ethylenisch ungesättigter Verbindungen, |
| $b_4$) | 0 bis 70 Gew.-% | weiterer von $b_1$)-$b_3$) verschiedener Monomere. |

Bevorzugt besteht das Polymer B) aus 60 bis 100 Gew.-%, besonders bevorzugt 80 bis 100 Gew.-% der Monomeren $b_1$), 0 bis 10 Gew.-%, besonders bevorzugt 0 bis 4 Gew.-% der Monomeren $b_2$), 0 bis 10 Gew.-%, besonders bevorzugt 0 bis 5 Gew.-% der Monomeren $b_3$) und 0 bis 40 und besonders bevorzugt 0 bis 20 Gew.-% der Monomeren $b_4$).

Als Monomere $b_1$) seien insbesondere Methyl(meth)acrylat, Ethyl(meth)acrylat, Propyl(meth)acrylat, n-Butyl (meth)acrylat oder 2-Ethylhexyl(meth)acrylat, Vinylaromaten wie Vinyltoluol, o- und p-Styrol und vorzugsweise Styrol, Vinyllaurat, Vinylstearat, Vinylpropionat und Vinylacetat genannt.

Insbesondere geeignet sind die Alkyl(meth)acrylate und die vinylaromatischen Verbindungen sowie deren Mischungen.

Monomer $b_2$) sind insbesondere $C_3$-$C_5$-Mono- oder Dicarbonsäuren bzw. deren Anhydride.

Monomere $b_2$) werden üblicherweise in untergeordneten Mengen eingesetzt, vorzugsweise in Mengen unter 4 Gew.-%, bezogen auf B), besonders bevorzugt sind Monomere $b_2$) nicht in B) enthalten.

Vernetzend wirkende Monomere $b_3$) sind z.B. radikalisch polymerisierbare Monomere mit mindestens einer Epoxy-, Hydroxy, N-Alkylol-, N-Alkoxy-, Amidingruppe oder wenigstens zwei nicht konjugierten ethylenisch ungesättigten Doppelbindungen. Selbstverständlich ist eine Kombination derartiger Verbindungen möglich

Beispiele für epoxidgruppenhaltige Monomere sind Glycidylacrylat, Glycidylmethacrylat und Vinylglycidylether.

Bevorzugte N-Alkylolverbindungen sind die N-Alkyloamide von ethylenisch ungesättigten Carbonsäuren mit 1 bis 4 C-Atome im Alkylrest wie N-Methylolacrylamid, N-Ethanolacrylamid, N-Propanolacrylamid, N-Methylolmethacrylamid, N-Ethanolmethacrylamid, N-Methylolmaleinimid, N-Methylolmaleinamid und N-Methylol-Vinylbenzamid.

Geeignete N-Alkoxymethylacrylate und -methacrylate sind in erster Linie Verbindungen mit 1 bis 8 C-Atomen im Alkoxyrest wie N-(Methoxymethyl)acrylamid, N-(Butoxymethyl)acrylamid, N-(Methoxymethyl)methacrylamid und N-(Butoxymethyl)methacrylamid und Methylolallylcarbamate, deren Methylolgruppen durch $C_1$-$C_8$-Alkyl verethert sein können. Als carbonylgruppenhaltige Monomere sind bevorzugt Acrolein, Diacetonacrylamid, Formylstyrol, Vinylalkylketone und (Meth)acryloxyalkylpropanale gemäß EP 00 03 516, Diacetonacrylat, Acetonylacrylat, Diaceton(meth) acrylat, 2-Hydroxypropylacrylatacetylacet und Butandiol-1,4-acrylat-acetylacetat zu nennen.

Als aziridingruppenhaltige Monomeres sei 2-(1-Aziridinyl)ethylmethacrylat genannt.

Als Vernetzungskomponenten mit mindestens zwei Acryl-, Methacryl, Alkyl- oder Vinylgruppen oder entsprechende Kombinationen sind zu nennen Alkylenglykoldi(meth)acrylate wie Ethylenglykoldiacrylat, 1,3-Butylenglykoldiacrylat, Propylenglykoldiacrylat und Triethylenglykoldimethacrylat, 1,3-Glycerindimethylacrylat, 1,1-Trimthylolpropandimethacrylat, l,l,l-Trimethylolethandiacrylat, Pentaerythritoltrimethacrylat, Sorbitanpentamethacrylat, Methylenbisacrylamid und -meth-acrylamid, Divinylbenzol, Vinylmethacrylat, Vinylcrotonat, Vinylacrylat und Divinyladipat, Diallylphthalat, Allylmethacrylat, Allylacrylat, Diallylmaleat, Diallylitakonat, Diallylmalonat, Diallylcarbonat, Triallylcitrat, Divinylether, Ethylenglykoldivinylether und Cyclopentadienylacrylat bzw. -methacrylat.

Zusätzlich zur Verwendung solcher vernetzender Monomere kann unter bestimmten Umständen die innere Festigkeit der Polymerfilme durch Zugabe von Metallsalzen wie z.B. Ca-, Mg-, Zn-Salze nach erfolgter Polymerisation erhöht werden, sofern sie zur Bindung mit diesen Salzen befähigte Gruppen wie beispielsweise Carboxylgruppen enthalten; darüber hinaus ist die Zugabe von Hydrazinderivaten, Aminooxyalkanen, sowie von Kondensationsprodukten auf der Basis Formaldehyd, Melamin, Phenol und/oder Harnstoff nach erfolgter Polymerisation möglich.

Weitere Monomere $b_4$) sind z.B. Vinylhalogenide, bevorzugt Vinylchlorid und Vinylidenchlorid, nicht aromatische Kohlenwasserstoffe mit 2 bis 8 C-Atomen und ein oder zwei olefinischen Doppelbindungen, z.B. Butadien, Isopren oder Chloropren, Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl(meth)acrylat, Dimethylaminoethyl(meth) acrylat, Diethylaminoethyl(meth)acrylat, (Meth)acrylsäurearyl-, alkaryl- oder Cycloalkylester, wie Cyclohexyl(meth) acrylat, Phenylethyl(meth)acrylat, Phenylpropyl(meth)acrylat- oder Acrylsäureester von heterocyclischen Alkoholen wie Furfuryl(meth)acrylat in Betracht.

Monomere $b_4$) können auch z.B. (Meth)acrylamid, dessen am Stickstoff mit $C_1$-$C_4$-Alkyl substituierte Derivate und hydrofunktionelle Comonomere, z.B. (Meth)acrylsäure-$C_1$-$C_{15}$-alkylester, welche durch ein oder zwei Hydroxylgruppen substituiert sind, sein. Insbesondere von Bedeutung als hydrofunktionelle Comonomere sind (Meth)acrylsäure-$C_1$-$C_8$-Hydroxyalkylester, wie n-Hydroxyethyl-, n-Hydroxypropyl- oder n-Hydroxybutyl(meth)acrylat.

Besonders bevorzugte Polymere B) enthalten keine chlorhaltigen Verbindungen wie Vinylchlorid und Vinylidenchlorid.

Weiterhin enthalten die Polymeren B) Ethylen, vorzugsweise allenfalls in untergeordneten Mengen von insbesondere unter 20 Gew.-%, besonders bevorzugt unter 10 Gew.-% und ganz besonders bevorzugt unter 5 Gew.-%. Insbesondere ist kein Ethylen in B) enthalten.

Das Polymer B) hat vorzugsweise eine nach Fox berechnete Glastemperatur von -20 bis +130, bevorzugt 0 bis +90, besonders bevorzugt von +10 bis +70°C.

Die Glasübergangstemperatur (Tg) kann nach Fox berechnet werden (T.G. Fox, Bull. Am. Phys. Soc. (Ser. II) 1, 123 [1956]). Danach gilt für die Glasübergangstemperatur von Mischpolymerisaten in guter Näherung:

$$\frac{1}{Tg} = \frac{X^1}{Tg^1} + \frac{X^2}{Tg^2} + ....... + \frac{X^n}{Tg^n}$$

mit

| | |
|---|---|
| $X^1$, $X^2$ ... $X^n$ = | Massenbrücken der Monomeren 1, 2, ... n |
| $Tg^1$, $Tg^2$ ... $Tg^n$ = | Glasübergangstemperaturen der Monomeren 1, 2 ... n in Grad Kelvin. |

Die Tg der wesentlichen Monomeren sind bekannt und z.B. in "J. Brandrup, E.H. Immergut, Polymer Handbook, 1st Ed., J. Wiley & Sons, NEw York 1966" aufgeführt.

Die Herstellung des Polymeren B) erfolgt durch radikalische Polymerisation. Geeignete Polymerisationsmethoden, wie Substanz-, Lösungs-, Suspensions- oder Emulsionspolymerisation sind dem Fachmann bekannt.

Insbesondere werden die Copolymerisate durch Lösungspolymerisation mit anschließender Dispergierung in Wasser (Sekundärdispersion) oder bevorzugt durch Emulsionspolymerisation hergestellt.

Die Monomeren können bei der Emulsionspolymerisation wie üblich in Gegenwart eines wasserlöslichen Initiators und eines Emulgators bei vorzugsweise 30 bis 95°C polymerisiert werden.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxodisulfate, Dibenzoylperoxid, Butylperpivalat, t-Butylper-2-ethylhexanoat, 2,5-Dimethyl-2,5-di(t-butylperoxy)hexan, Cumolhydroperoxid, als auch um Azoverbindungen wie beispielsweise Azobisisobutyronitril, 2,21-Azobis(2-amidinopropan)dihydrochlorid, handeln.

Geeignet sind auch kombinierte Systeme, die aus wenigstens einem organischen Reduktionsmittel und wenigstens einem Peroxid und/ oder Hydroperoxid zusammengesetzt sind, z.B. tert.-Butylhydroperoxid und das Natriummetallsalz der Hydroxymethansulfinsäure oder Wasserstoffperoxid und Ascorbinsäure. Ferner eignen sich kombinierte Systeme, die darüber hinaus eine geringe Menge einer im Polymerisationsmedium löslichen Metallverbindung,

deren metallische Komponente in mehreren Wertigkeitsstufen auftreten kann, enthalten, z.B. Ascorbinsäure(Eisen(II) sulfat/Wasserstoffperoxid, wobei anstelle von Ascorbinsäure auch häufig das Natriummetallsalz der Hydroxymethansulfinsäure, Natriumsulfit, Natriumhydrogensulfit oder Natriummetabisulfit und anstelle von Wasserstoffperoxid tert.-Butylhydroperoxid oder Alkalimetallperoxodisulfate und/oder Ammoniumperoxodisulfate angewendet werden.

In der Regel beträgt die Menge der eingesetzten radikalischen Initiatoren, bezogen auf die Gesamtmenge der zu polymerisierenden Monomeren 0,1 bis 3 Gew.-%. Besonders bevorzugt werden Ammonium- und/oder Alkalimetallperoxodisulfate bzw. tert.-Butylhydroperoxid in Kombination mit einem Reduktionsmittel als Initiator eingesetzt.

Die Art und Weise, in der das radikalische Initiatorsystem im Verlauf der erfindungsgemäßen radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Für die Emulsionspolymerisation können üblicherweise bekannte ionische und/oder nichtionische Emulgatoren und/oder Schutzkolloide bzw. Stabilisatoren verwendet werden.

Als derartige grenzflächenaktive Substanzen kommen prinzipiell die als Dispergiermittel üblicherweise eingesetzten Schutzkolloide und Emulgatoren in Betracht. Eine ausführliche Bearbeitung geeigneter Schutzkolloide findet sich in Houben-Weyl, Methoden der organischen Chemie, Band XIV/I, makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen ausschließlich Emulgatoren eingesetzt, deren relative Molekulargewichte im Unterschied zu den Schutzkolloiden üblicherweise unter 1000 liegen. Selbstverständlich müssen im Falle der Verwendung von Gemischen grenzflächenaktiver Substanzen die Einzelstoffkomponenten miteinander verträglich sein, was im Zweifelsfall an Hand weniger Vorversuche überprüft werden kann.

Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; $C_8$ bis $C_{36}$), ethoxylierte Mono-, Di- und Tri-Alkylphenole (EO-Grad: bis 50, Alkylrest: $C_4$ bis $C_9$), Alkalimetallsalze von Dialkylestern der Sulfobernsteinsäure sowie Alkali- und Ammoniumsalze von Alkylsulfaten (Alkylrest: $C_8$ bis $C_{12}$), von ethoxyliertem Alkanol (EO-Grad: 4 bis 3, Alkylrest: $C_{12}$ bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$).

Weitere geeignete Dispergiermittel sind Verbindungen der allgemeinen Formel II

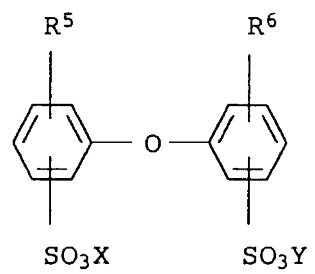

(II)

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Weitere geeignete Emulgatoren finden sich in Houben-Weyl, Methoden der organischen Chemie, Band XIV/1, Makromolekulare Stoffe, Georg Thieme-Verlag, Stuttgart, 1961, Seiten 192 bis 208.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester, tert.-Dodecylmercaptan oder Mercaptoessigsäure.

Die bei dem erfindungsgemäßen Verfahren verwendete wäßrige Dispersion kann in einfacher Weise durch

Mischen der wäßrigen Dispersion des Ethylenpolymeren A) mit der wäßrigen Dispersion des Polymeren B) erhalten werden.

Es hat sich jedoch als besonders geeignet erwiesen, zunächst eine Dispersion des Ethylenpolymeren A) wie oben beschrieben herzustellen und dann in Gegenwart des Ethylenpolymeren A) die Monomeren des Polymeren B) zu polymerisieren. Die Monomeren von B) können in gesamter Menge in eine Vorlage gegeben oder einer Vorlage kontinuierlich zudosiert werden, welche A) enthält. Weiterhin können z.B. sowohl A) bzw. Teile von A) als auch die Monomeren von B) kontinuierlich in gleichen oder verschiedenen Zeiträumen in eine Vorlage dosiert werden.

Da das Ethylenpolymer A) aufgrund des Gehalts an Säuregruppen, bzw. der entsprechenden Salzgruppen, eine emulgierende Wirkung hat, kann bei der vorstehenden Verfahrensweise der Herstellung von B) in Gegenwart von A) auf Emulgatoren ganz oder teilweise verzichtet werden. Gegebenenfalls können z.B. 0,05 bis 3 Gew.-% Emulgatoren, bezogen auf die Gewichtssumme von A) und B) verwendet werden.

Die erhaltene wäßrige Dispersion von A) und B) hat vorzugsweise einen Feststoffgehalt von 20 bis 70 Gew.-%.

Die wäßrige Dispersion wird für siegelbare Beschichtungen, d.h. als Siegellack verwendet und kann für diese Verwendung übliche Zusatzstoffe z.B. Netzmittel, Verdicker, Entschäumer oder Filmbildner enthalten.

Die Dispersion kann dazu zunächst auf ein Substrat, z.B. Aluminium, (un)bedrucktes Papier, Kartonagen, Folien aus Polyvinylchlorid, Polyethylenterephthalat, Polystyrol oder Polyolefinen aufgetragen werden. Die Auftragsmenge (bezogen auf Feststoff) beträgt im allgemeinen 1 bis 100 g, bevorzugt 10-15 g/$m^2$ beschichtete Fläche.

Das beschichtete Substrat wird dann mit einem weiteren, vorzugsweise unbeschichteten Substrat verpreßt (heißsiegeln bzw. siegeln). Als unbeschichtete Substrate kommen z.B. ebenfalls die oben genannten in Betracht. Ferner eignen sich Glas, Metalle und Textilien als Substrate.

Vorzugsweise ist zumindest eines der beiden heißzuversiegelnden Substrate aus Kunststoff. Besonders bevorzugt ist das mit der Dispersion beschichtete Substrat aus Aluminium. Bei dem Kunststoff handelt es sich insbesondere um Polystyrol, Polyethylentherephtalat, PVC, Polyethylen oder Polypropylen.

Durch die Heißsiegelung können Gegenstände verpackt werden, indem z.B. eine Aluminiumfolie punkt- oder zonenförmig mit dem Heißsiegellack beschichtet und anschließend z.B. mit einer tiefgezogenen Kunststoff-Folie verpreßt wird, so daß ein zu verpackendes Gut umschlossen wird.

Bei der Heißsiegelung werden die Substrate durch Siegelbacken zusammengepreßt. Die Temperatur an den Siegelbacken kann dabei 80-300°C, vorzugsweise 80-250°C betragen. Die Anpreßdrucke liegen im allgemeinen zwischen 0,1 bar und 10 bar, insbesondere zwischen 2 bis 6 bar, bei einer Anpreßzeit (Kontaktzeit) von mindestens 0,5 Sekunden, im allgemeinen zwischen 1 und 5 Sekunden.

Die erfindungsgemäßen Dispersionen zeichnen sich dadurch aus, daß sie insbesondere zwischen Aluminiumfolie und Polystyrol, Polyethylentherephthalat, Polyvinylchlorid und polyolefinischen Substraten und hier insbesondere Substanzen aus Polypropylen und Polyethylen eine Siegelung mit hoher Siegelnahtfestigkeit bewirken; dabei besitzt die Siegellackschicht alleine gute Blockfestigkeit.

Die erfindungsgemäßen Dispersionen zeichnen sich ferner dadurch aus, daß sie eine gute Haftung zu Aluminiumfolie besitzen und hierfür keine weitere Primerschicht auf der Aluminiumoberfläche benötigen.

Vergleichsbeispiele

Vergleichsbeispiele 1 und 2 gemäß US 5 385 967:

Copolymerisat I:

Bei den Copolymerisaten I handelt es sich um wasserlösliche Copolymerisate, welche entsprechend dem Verfahren der DE-A-3 225 876 in Substanzpolymerisation hergestellt wurden.

Dazu wurden 60 Gew.-Teile Styrol und 40 Gew.-Teile Acrylsäure in einen 1 1 fassenden Druckkessel mit nachgeschaltetem Druckrohr doppelten Rauminhalts mit Druckregler kontinuierliche zudosiert. Das System wurde auf 310° erhitzt. Der Druck wurde im Bereich zwischen 5 und 50 bar gehalten und einmal innerhalb einer Minute durch eine periodische Druckregelung in diesem Bereich variiert.

Die Verweilzeit betrug 11 Min.; die Copolymerschmelze wurde mengenmäßig in dem Maße ausgefahren, wie frische Monomerenmischung zugefahren wurde. Das Copolymerisat wies ein mittleres Molekulargewicht Mn von 650 und eine Molekulargewichtsuneinheitlichkeit $U = M_w/M_n -1$ von 1,5 auf.

Herstellung der Copolymerisate II in Gegenwart der Copolymerisate I:

In einem 3 l-Vierhalskolben, der mit Rückflußkühler, 2 Zulaufgefäßen, Thermometer, Pilot-Rührwerk sowie Gaseinlaß und -auslaß ausgestattet war, wurden die in der Tabelle 1 angegebenen Mengen einer wäßrigen Lösung der Copolymeren I vorgelegt und nach Spülung des Reaktionsgefäßes mit Stickstoff auf 85°C erhitzt. Man gab 54 g

einer 1,5 %igen wäßrigen Natriumperoxidsulfatlösung hinzu und ließ dann bei 85°C unter Rühren während 2 h 1000 g der Monomeren des Copolymerisats II zulaufen. Gleichzeitig wurden in einem separaten Zulauf 126 g einer 1,5 %igen Natriumperoxidsulfatlösung in 2,5 h zugetropft. Nach Beendigung der beiden Zuläufe ließ man noch 1 h bei 85°C reagieren und kühlte anschließend auf Raumtemperatur.

Die nach dieser Herstellvorschrift erhaltenen Polymerdispersionen waren koagulatfrei. Die Zusammensetzung ist in Tabelle 1 angegeben.

Die Vergleichsbeispiele 3 und 4 entsprechend Beispielen 1 und 2 der DE-A-3 921 256:

In einem Reaktionsgefäß wurde Mischung 1 zusammen mit 260 g Isobutanol vorgelegt und auf 105°C erwärmt. Dann wurde Mischung 2 zugegeben und 2,5 Stunden bei Rückflußtemperatur polymerisiert. Anschließend wurde Mischung 3 im Verlauf von 3 Stunden bei ca. 105°C zudosiert.

Danach wurde noch 4 Stunden bei 105°C polymerisiert und dabei mit 200 g Isobutanol verdünnt. Nach Abkühlen auf 60°C wurden zunächst 35,4 g 25 gew.-%ige wäßrige Ammoniaklösung und dann 850 g Wasser eingerührt. Unter Vakuum wurde so lange ein Isobutanol-Wasser-Gemisch abdestilliert, bis praktisch kein Isobutanol mehr überging. Während der Destillation wurde eine der abdestillierten Flüssigkeitsmenge entsprechende Menge Wasser zugegeben.

| Mischung 1: | | | |
|---|---|---|---|
| | | Vergl.-Beispiel 3 | Vergl.-Beispiel 4 |
| Methylmethacrylat | (g) | 160 | 145 |
| n-Butylacrylat | (g) | 100 | 110 |
| Acrylsäure | (g) | 20 | 25 |

| Mischung 2: | | | |
|---|---|---|---|
| tert.-Butylbenzoat | (g) | 1,5 | 1,5 |
| tert.-Butylperoctoat | (g) | 1,5 | 1,5 |
| Isobutanol | (g) | 30 | 30 |

| Mischung 3: | | | |
|---|---|---|---|
| Methylmethacrylat | (g) | 370 | 380 |
| n-Butylmethacrylat | (g) | 350 | 340 |
| tert.-Butylperbenzoat | (g) | 7,5 | 6,7 |
| tert.-Butylperoctoat | (g) | 4,5 | 6,0 |
| Isobutanol | (g) | 150 | 140 |

Die Zusammensetzung ist in Tab. 1 angegeben.

Vergleichsbeispiel 5

Als Vergleichsbeispiel 5 wurde das Produkt Plexisol® PM 555 der Fa. Röhm, Darmstadt geprüft. Dieses Produkt stellt derzeit den Stand der Technik bezüglich Siegelbarkeit gegenüber Polypropylen dar. Es ist eine Emulsion auf Methacrylat-Olefin-Basis in Butylacetat/Methylethylketon.

Derartige Produkte sind in der EP 023 978 (Fa. Röhm) beschrieben. Um Haftfestigkeit gegen Aluminiumfolie zu gewährleisten, empfiehlt Röhm eine Grundierung aus PVC-Mischpolymerisaten (z.B. Vinylite VMCH der Fa. Union Carbide).

Tabelle 1: Zusammensetzung der Copolymerisate der Vergleichsbeispiele

| Bsp. Nr. | Copolymerisat I [Gew.-Teile] | Monomere des Copolymerisats II [Gew.-Teile] | Verhältnis I/II | Additive [Gew.-Teile] | Endpolymerisation | | |
|---|---|---|---|---|---|---|---|
| | | | | | pH-Wert | Viskosität[2] [mPas] | FG |
| V1 | 60 S/40 AS[1] | 80 nBA/20 S | 50/50 | - | 8,2 | 300 | 49,8 |
| V2 | 60 S/40 AS[1] | 70 nBA/30 MMA | 30/70 | - | 8,1 | 290 | 49,3 |
| V3 | 57 MMA/ 36 NBA/ 7 AS | 51 MMA/ 49 nBA | 28/72 | - | 7,8 | 250 | 49,3 |
| V4 | 57 MMA/ 39 nBA/ 9 AS | 53 MMA/ 49 nBA | 28/72 | - | 7,9 | 250 | 47.1 |

1) FG 35 %, pH 9

2) Die Viskosität wurde bestimmt nach DIN 53 019

Abkürzungen:

S: Styrol
AS: Acrylsäure
MMA: Methylmethacrylat
nBA: n-Butylacrylat
FG: Feststoffgehalt

Glasübergangstemperaturen der Copolymerisate

Die Glasübergangstemperaturen wurden mit Hilfe der Differential Scanning Calorimetrie nach ASTM 3418/82 bestimmt. Näherungsweise können sie auch nach der Fox-Gleichung aus den Glasübergangstemperaturen der Monomeren berechnet werden (T.G. Fox, Bull. Am. Phys. Soc. Ser. II 1, 123 1956).

Tabelle 2

| Glasübergangstemperaturen in °C [DSC] | | |
|---|---|---|
| Beispiel | Copolymerisat I | Copolymerisat II |
| V1 | 125 | -26 |
| V2 | 125 | -14 |
| V3 | 35 | 12 |
| V4 | 30 | 16 |

Beispiele

Die Herstellung des Polymeren B erfolgte in Gegenwart des Polymeren A. Die Zusammensetzung der Polymeren ist in der Tabelle 3 angegeben.

Hierfür wurde Ethylenpolymer A in einem 3 1 Reaktionskolben mit Rückflußkühler, 3 Zulaufgefäßen, Thermometer, Pilotrührwerk und Stickstoffeinleitung vorgelegt. Zusammen mit 90 Gew.-% des insgesamt verwendeten Initiatorsystems (tert.-Butylhydroperoxid, Na-Hydroxymethylsulfinsäure) wurde diese Lösung nach Stickstoffspülung unter Rühren auf 70°C erhitzt.

Anschließend wurden die Monomeren und die restlichen Initiatormengen (0,8 Gew.-% t-BHP und 0,8 Gew.-% Na-Hydroxymethylsulfinsäure, bezogen auf Monomere des Copolymeren B) kontinuierlich in 1,5 h unter Rühren zugegeben. In den Beispielen 1 bis 10 wurden die Monomeren gemäß Tabelle 3 in der angegebenen Stufenfolge dosiert.

Danach wurde eine weitere Stunde bei 70°C gerührt und dann auf Raumtemperatur abgekühlt.

Es wurden koagulatfreie Dispersionen erhalten. Die Zusammensetzung und die charakteristischen Daten der Beispiele sind in der Tabelle 3 zusammengefaßt.

Tabelle 3

| Zusammensetzung der Copolymerisate der Beispiele | | | | |
|---|---|---|---|---|
| | Zusammensetzung | Mengenverhältnis Copol. A:B | Tg (°C) Copol. B | |
| Bsp.-Nr. | Copol. A/Copol. B | | | FG (%) |
| 1 | A 60 E/20 EHA/20 AS; $NH_3$<br>B 50 nBA/50 S | 33,4:66,6 | 13,6 | 34.1 |
| 2 | A 60 E/20 EHA/20 AS; $NH_3$<br>B 20 nBA/80 S | 33,4:66,6 | 63,2 | 34,4 |
| 3 | A 60 E/20 EHA/20 AS; $NH_3$<br>B 30 nBA/70 S | 33,4:66,6 | 44,8 | 34,1 |
| 4 | A 60 E/20 EHA/20 AS; $NH_3$<br>B 30 nBA/70 S | 43:57 | 44,8 | 33,8 |

Tabelle 3 (fortgesetzt)

| Zusammensetzung der Copolymerisate der Beispiele | | | | |
|---|---|---|---|---|
| | Zusammensetzung | Mengenverhältnis Copol. A:B | Tg (°C) Copol. B | |
| Bsp.-Nr. | Copol. A/Copol. B | | | FG (%) |
| 5 | A 60 E/20 EHA/20 AS; $NH_3$<br>B 50 nBA/50 S | 43:57 | 13,6 | 34 |
| 6 | A 80 E/20 AS; DMEA<br>B 50 nBA/50 S | 33,4:66,6 | 13,6 | 34,4 |
| 7 | A 80 E/20 AS; DMEA<br>B 50 nBA/50 S | 43:57 | 13,6 | 30 |
| 8 | A 80 E/20 AS; $NH_3$<br>B 50 nBA/50 S | 33,4:66,6 | 13,6 | 35 |
| 9[1)] | A 80 E/20 AS; $NH_3$<br>B 50 nBA/50 S | 33,4:66,6 | 13,6 | 33,7 |
| 10 | A 80 E/20 AS; $NH_3$<br>B 50 nBA/50 S | 43:57 | 13,6 | 34,6 |
| Abkürzungen<br>DMEA:<br>E: Ethylen<br>EHA: Ethylhexylacrylat | | | | |

1) Die Polymerisation der Polymeren B erfolgte in Gegenwart von zusätzlich 10 Gew.-%, bezogen auf B, eines Vinylchlorid/Vinylacetat/Maleinsäure Copolymeren der Fa. Union Carbide (Vinylite VMCH).

Anwendungstechnische Prüfung

Beschreibung der Prüfmethoden:

1. Applikation der Lacke

Die wäßrigen Dispersionen wurden auf einer 40 µm starken Aluminium (Al)-Folie, die rein und unbehandelt ist, mit einem 36 µm Rakel aufgezogen und 3 Minuten bei 130°C in einem Umlufttrockenschrank getrocknet. Die Trockenschichtdicke lag in dem Bereich 10-15 µm (≙ 10-15 g/qm).

2. Siegeln

Die beschichteten Al-Folien wurden mit den in der Tabelle 4 angegebenen Kunststoffolien (Folienstärke 250-300 µm, die die dort angegebenen Oberflächenspannungen besitzen und nicht weiter behandelt werden, unter Druck und Temperatur in einem Schweißgerät des Typs HSG/ETK 525 der Fa. Brugger miteinander verpreßt. Die Siegelbacken waren glatt und waren 150x10 mm groß. Beim Siegeln wurde die untere Backe auf die angegebene Temperatur eingestellt, die obere Backe blieb unbeheizt (Raumtemperatur). Beim Siegeln kam die Al-Folie auf die beheizte Backe und die Kunststoffolie auf die kalte Backe. Gesiegelt wurde bei 230°C (4 kp für eine Dauer von 4 Sekunden) und 220°C (4 kp, 1 Sekunde),

3. Siegelnahtfestigkeit

Die Verbundstärke wurde in einem Reißgerät der Fa. Frank Typ Nr. 81565 anhand der Reißkraft gemessen und in N/10 mm angegeben. Die Abzugsgeschwindigkeit betrug 150 mm/min. Bei dem Reißen werden zwei Größen angegeben. Fmax: die maximale Reißkraft und FM/N : der Mittelwert der Reißkraftwerte entlang der Siegelnaht (ca. 10-12 cm). (Ergebnisse in Tabelle 4).

4. Blockfestigkeit

Die Blockfestigkeit wurde mit der getrockneten aber nicht gesiegelten Lackfläche auf der Al-Folie bei den in der Tabelle angegebenen Bedingungen (Temperatur, Auflagegewicht, Dauer) geprüft. Sie wurde bestimmt "face to face" (d.h. Lackierung gegen Lackierung (in der Tabelle S/S: Schicht/Schicht), dann Lackierung gegen unbeschichtete Al-Folie (in der Tabelle als S/R: Schicht/Rücken) und Lackierung gegen eine mit einem Druckfarbenbindemittel (auf Nitrocellulose-Basis) beschichtete Al-Folie (in der Tabelle als S/DF = Schicht gegen Druckfarbenbindemittel). Die Beurteilung erfolgt im Notensystem: 1 = sehr gute Blockfestigkeit: die Flächen fallen nach der Belastung wieder auseinander, 5 = sehr schlecht: die Flächen sind miteinander verklebt und nur sehr schwer zu trennen (Ergebnisse in Tabelle 5).

5. Korrosionsschutztest

Hier wurde ein Tropfen einer wäßrigen Lösung aus 70 Gew.-T1. Wasser, 20 Gew.-Tl. HCl (37 gew.-%ig) und 10 Gew.-Tl. $CuSO_4$ x $H_2O$ auf die auf Al-Folie applizierten und getrockneten Lacke (wie oben beschrieben) gegeben. Das Prüfergebnis ist positiv (+), wenn nach 30 Minuten kein Loch in der Al-Folie sichtbar ist, andernfalls ist es negativ (-). (Ergebnisse in Tabelle 5).

Tabelle 4: Siegelbarkeit

| | Siegeln bei 230°C | | | | Siegeln bei 220°C |
|---|---|---|---|---|---|
| Bsp.-Nr. | PVC (30,6 mN/m)* Fmax/FM/N | PET (38,0 mN/M)* Fmax/FM/N | PS (29,8 mN/m)* Fmax/FM/N | PS (35,44 mN/m)* Fmax/FM/N | PS (35-44 mN/m)* Fmax/FM/N |
| 1 | 13.1/8.5 | Note: 3-4*** | 17.0/14.5 | | 7.3/5.5 |
| 2 | keine | keine | 18.3/15.3 | 17.7/16.1 | 5.4/3.3 |
| 3 | keine | keine | 19.8/15.3 | | 7.2/4.3 |
| 4 | keine | keine | 24.6/19.8 | 15.7/10.6 | 6.7/4.4 |
| 5 | 10.5/8.1 | 8.2/4.6 | 11.0/8.6 | Kohäsion in PP II | 11.8/5.8 |
| 6 | 11.7/5.4 | 3.9/1.2 | 17.8/13.3 | 14.9/12.4 | 10/3.6 |
| 7 | 9.4/3.3 | Note: 3-4 | 13.8/10.3 | 13.6/12.6 | 11.6/5.0 |
| 8 | 15.0/4.6 | Note: 4 | 20.0/16.3 | 12.5/10.9 | |
| 9 | 21.7/7.9 | 4.9/2.0 | 22.2/16.7 | 12.6/10.8 | 4.1/3.1 |
| 10 | 7.9/4.1 | Note: 4 | 13.2/10.2 | | 5.4/3.1 |
| Vgl.Bsp.1 | 3.3/2.9 | 4.5/3.3 | 4.9/3.0 | 9.1/5.3 | 4.1/2.7 |
| Vgl.Bsp.2 | 8.0/5.1 | 10.9/5.6 | 6.7/4.8 | 5.1/3.5 | 2.6/0.9 |
| Vgl.Bsp.3 | 3.8/2.9 | 2.8/2.0 | 6.2/4.5 | Note: 4 | 1.3/0.6 |
| Vgl.Bsp.4 | 3.1/2.3 | 2.4/1.9 | 5.9/4.0 | Note: 4 | 1.0/0.4 |
| PM 555 | 6.5/4.3 | 6.4/5.0 | 7.7/5.9 | 8.7/6.6 | 2.3/1.3 |
| PM 555+Pr** | | | | 13.1/11.7 | 6.3/4.8 |

* Bei dem angegebenen Wert handelt es sich um die Oberflächenspannung der Folie

** Zu PM 555 wurde ein Primer (Haftungsvermittler) zugesetzt

*** Noten von 3 bis 5 werden vergeben, wenn die Reißkraft $F_{max}$ < 1,0 N/10 mm liegt (Note 3 = schlecht, Note 5 = sehr schlecht)

Tabelle 5: Blockfestigkeit und Korrosionstest

| | Blockfestigkeit 15 h, 50°C, 1500 g | | Blockfestigkeit 15 h, 40°C, 100 g | | Korrosionstest $HCl/CuSO_4$ 30'/RT |
|---|---|---|---|---|---|
| Bsp.-Nr. | S/S | S/R | S/S | S/DF | Schadensbild |
| 1 | 5 | 3 | 4 | 2 | + |
| 2 | 2 | 1 | 1 | 1 | + |
| 3 | 3 | 2 | 1-2 | 1 | + |
| 4 | 3 | 2 | 2 | 1 | + |
| 5 | 5 | 4 | 4 | 2 | + |
| 6 | 5 | 3- | 4-5 | 2 | + |
| 7 | 5 | 2- | 4-5 | 2 | + |
| 8 | 5 | 2 | 4-5 | 2 | + |
| 9 | 5 | 2 | 4-5 | 2 | + |
| 10 | 5 | 2-3 | 3 | 2 | + |
| Vgl.Bsp.-Nr.1 | 3 | 1-2 | 2 | 1- | + |
| Vgl.Bsp.-Nr.2 | 5 | 4 | 5 | 4 | + |
| Vgl.Bsp.-Nr.3 | 4-5 | 4-5 | 4-5 | 4-5 | + |
| Vgl.Bsp.-Nr.4 | 4-5 | 4-5 | 4-5 | 4-5 | + |
| PM 555 | 3 | 1 | 1 | 1 | +/- |
| PM 555 + Pr. | 3 | 1 | 1 | 1 | + |

**Patentansprüche**

1. Verfahren zum Heißsiegeln von Substraten, dadurch gekennzeichnet, daß ein Substrat mit einer wäßrigen Dispersion, welche ein Ethylenpolymer A) mit mindestens 20 Gew.-% Ethylen und mindestens 5 Gew.-% einer ethylenisch ungesättigten Säure und ein radikalisch polymerisiertes Polymer B) enthält, wobei das Polymer B) durch Emulsionspolymerisation in Gegenwart von Ethylenpolymer A) hergestellt wird,beschichtet wird und das beschichtete Substrat mit einem zweiten Substrat bei erhöhter Temperatur verpreßt wird.

2. Verfahren gemäß Anspruch 1, dadurch gekennzeichnet, daß die Temperatur 80 bis 300°C und der Anpreßdruck 0,1 bis 10 bar beträgt.

3. Verfahren gemäß Anspruch 1 oder 2, dadurch gekennzeichnet, daß das Ethylenpolymer aus

| | |
|---|---|
| 20 bis 95 Gew.-% | Ethylen |
| 5 bis 80 Gew.-% | einer ethylenisch ungesättigten Säure und |
| 0 bis 60 Gew.-% | weiteren Monomeren |

besteht.

4. Verfahren gemäß einem der Ansprüche 1 bis 3, dadurch gekennzeichnet, daß das Polymer B) aus

| | |
|---|---|
| 30 bis 100 Gew.-% | sogenannter Hauptmonomere, ausgewählt aus $C_1$-$C_{20}$ Alkyl(meth)acrylaten, $C_8$-$C_{12}$ vinylaromatischen Verbindungen, Vinylester von Carbonsäuren mit 1 bis 20 C-Atomen und ethylenisch ungesättigten Nitrilen, |
| 0 bis 30 Gew.-% | einer ethylenisch ungesättigten Säure oder Anhydrid |
| 0 bis 20 Gew.-% | vernetzend wirkender ethylenisch ungesättigter Verbindungen |
| 0 bis 70 Gew.-% | weiteren Monomeren |

besteht.

5. Verfahren gemäß einem der Ansprüche 1 bis 5, dadurch gekennzeichnet, daß ein Substrat aus Kunststoff oder Metall mit der wäßrigen Dispersion beschichtet wird und das so beschichtete Substrat mit einem zweiten Substrat bei erhöhter Temperatur verpreßt wird.

6. Wäßrige Dispersion, enthaltend ein Ethylenpolymer A) mit mindestens 20 Gew.-% Ethylen und mindestens 5 Gew.-% einer ethylenisch ungesättigten Säure und ein radikalisch polymerisiertes Polymer B), wobei Polymer B) durch Emulsionspolymerisation in Gegenwart von Ethylenpolymer A) hergestellt wird.

7. Wäßrige Dispersion gemäß Anspruch 6, wobei das Ethylenpolymer aus

| | |
|---|---|
| 20 bis 95 Gew.-% | Ethylen |
| 5 bis 80 Gew.-% | einer ethylenisch ungesättigten Säure und |
| 0 bis 60 Gew.-% | weiteren Monomeren |

besteht.

8. Wäßrige Dispersion gemäß Anspruch 7, wobei das Polymer B aus

| | |
|---|---|
| 30 bis 100 Gew.-% | sogenannter Hauptmonomere, ausgewählt aus $C_1$-$C_{20}$ Alkyl(meth)acrylaten, $C_8$-$C_{12}$ vinylaromatischen Verbindungen, Vinylester von Carbonsäuren mit 1 bis 20 C-Atomen und ethylenisch ungesättigten Nitrilen, |
| 0 bis 30 Gew.-% | einer ethylenisch ungesättigten Säure oder Anhydrid |

(fortgesetzt)

| | |
|---|---|
| 0 bis 20 Gew.-% | vernetzend wirkender ethylenisch ungesättigter Verbindungen |
| 0 bis 70 Gew.-% | weiteren Monomeren |

besteht.

**9.** Verwendung einer wäßrigen Dispersion gemäß Anspruch 6 als Heißsiegellack.

**Claims**

**1.** A method for heat-sealing substrates, which comprises coating a substrate with an aqueous dispersion comprising an ethylene polymer A), with at least 20 % by weight of ethylene and at least 5 % by weight of an ethylenically unsaturated acid, and a free-radically polymerized polymer B), the polymer B) being prepared by emulsion polymerization in the presence of ethylene polymer A), and pressing the coated substrate with a second substrate at elevated temperature.

**2.** A method as claimed in claim 1, wherein the temperature is from 80 to 300°C and pressing is carried out at from 0.1 to 10 bar.

**3.** A method as claimed in claim 1 or 2, wherein the ethylene polymer consists of

| | |
|---|---|
| from 20 to 95 % | by weight of ethylene, |
| from 5 to 80 % | by weight of an ethylenically unsaturated acid, and |
| from 0 to 60 % | by weight of further monomers. |

**4.** A method as claimed in any of claims 1 to 3, wherein the polymer B) consists of

| | |
|---|---|
| from 30 to 100 % | by weight of monomers referred to as principal monomers, selected from $C_1$-$C_{20}$ alkyl (meth) acrylates, $C_8$-$C_{12}$ vinyl-aromatic compounds, vinyl esters of carboxylic acids of 1 to 20 carbons, and ethylenically unsaturated nitriles, |
| from 0 to 30 % | by weight of an ethylenically unsaturated acid or anhydride, |
| from 0 to 20 % | by weight of ethylenically unsaturated compounds having a crosslinking action, and |
| from 0 to 70 % | by weight of further monomers. |

**5.** A method as claimed in any of claims 1 to 4, wherein a substrate of plastic or metal is coated with the aqueous dispersion and the substrate thus coated is pressed with a second substrate at elevated temperature.

**6.** An aqueous dispersion comprising an ethylene polymer A), with at least 20 % by weight of ethylene and at least 5 % by weight of an ethylenically unsaturated acid, and a free-radically polymerized polymer B), polymer B) being prepared by emulsion polymerization in the presence of ethylene polymer A).

**7.** An aqueous dispersion as claimed in claim 6, wherein the ethylene polymer consists of

| | |
|---|---|
| from 20 to 95 % | by weight of ethylene |
| from 5 to 80 % | by weight of an ethylenically unsaturated acid, and |
| from 0 to 60 % | by weight of further monomers. |

**8.** An aqueous dispersion as claimed in claim 7, wherein the polymer B consists of

| | |
|---|---|
| from 30 to 100 % | by weight of monomers referred to as principal monomers, selected from $C_1$-$C_{20}$ alkyl(meth) acrylates, $C_8$-$C_{12}$ vinyl-aromatic compounds, vinyl esters of carboxylic acids of 1 to 20 carbons, and ethylenically unsaturated nitriles, |

(continued)

| | |
|---|---|
| from 0 to 30 % | by weight of an ethylenically unsaturated acid or anhydride |
| from 0 to 20 % | by weight of ethylenically unsaturated compounds having a crosslinking action, and |
| from 0 to 70 % | by weight of further monomers. |

**9.** The use of an aqueous dispersion as claimed in claim 6 as heat-sealing lacquer.

**Revendications**

**1.** Procédé de scellement à chaud de substrats, caractérisé en ce que l'on enduit un substrat avec une dispersion aqueuse contenant un polymère de l'éthylène A) comportant au moins 20% en poids d'éthylène et au moins 5% en poids d'un acide à insaturation éthylénique, et un polymère B) polymérisé de façon radicalaire, où le polymère B) est préparé par polymérisation en émulsion en présence du polymère de l'éthylène A), et le substrat enduit est comprimé avec un deuxième substrat à température élevée.

**2.** Procédé selon la revendication 1, caractérisé en ce que la température s'élève à 80-300°C et la pression de compression s'élève à 0,1-10 bar.

**3.** Procédé selon la revendication 1 ou 2, caractérisé en ce que le polymère de l'éthylène est constitué de

| | |
|---|---|
| 20-95% en poids | d'éthylène, |
| 5-80% en poids | d'un acide à insaturation éthylénique et |
| 0-60% en poids | d'autres monomères. |

**4.** Procédé selon l'une quelconque des revendications 1 à 3, caractérisé en ce que le polymère B) est constitué de

| | |
|---|---|
| 30-100% en poids | des polymères principaux, choisis dans le groupe formé par les (méth)acrylates d'alkyle en $C_1$-$C_{20}$, les composés vinylaromatiques en $C_8$-$C_{12}$, les esters vinyliques d'acides carboxyliques ayant 1-20 atomes de carbone et les nitriles à insaturation éthylénique, |
| 0-30% en poids | d'un acide ou d'un anhydride à insaturation éthylénique, |
| 0-20% en poids | de composés à insaturation éthylénique à action réticulante, |
| 0-70% en poids | d'autres monomères. |

**5.** Procédé selon l'une quelconque des revendications 1 à 4, caractérisé en ce que l'on enduit un substrat en matière plastique ou en métal avec la dispersion aqueuse et le substrat ainsi enduit est comprimé avec un deuxième substrat à température élevée.

**6.** Dispersion aqueuse contenant un polymère de l'éthylène A comportant au moins 20% en poids d'éthylène et au moins 5% en poids d'un acide à insaturation éthylénique, et un polymère B) polymérisé de façon radicalaire, où le polymère B) est préparé par polymérisation en émulsion en présence du polymère de l'éthylène A).

**7.** Dispersion aqueuse selon la revendication 6, où le polymère de l'éthylène est constitué de

| | |
|---|---|
| 20-95% en poids | d'éthylène, |
| 5-80% en poids | d'un acide à insaturation éthylénique et |
| 0-60% en poids | d'autres monomères. |

**8.** Dispersion aqueuse selon la revendication 7, où le polymère B) est constitué de

| | |
|---|---|
| 30-100% en poids | des polymères principaux, choisis dans le groupe formé par les (méth)acrylates d'alkyle en $C_1$-$C_{20}$, les composés vinylaromatiques en $C_8$-$C_{12}$, les esters vinyliques d'acides carboxyliques ayant 1-20 atomes de carbone et les nitriles à insaturation éthylénique, |
| 0-30% en poids | d'un acide ou d'un anhydride à insaturation éthylénique, |

(suite)

| | |
|---|---|
| 0-20% en poids | de composés à insaturation éthylénique à action réticulante, |
| 0-70% en poids | d'autres monomères. |

**9.** Utilisation d'une dispersion aqueuse selon la revendication 6 en tant que laque de scellement à chaud.